(19) Europäisches Patentamt

European Patent Office

Office européen des brevets

(11) **EP 1 128 575 B1**

(12) **EUROPEAN PATENT SPECIFICATION**

(45) Date of publication and mention
of the grant of the patent:
**26.04.2006 Bulletin 2006/17**

(51) Int Cl.:
*H04B 7/08* (2006.01)    *H04L 1/06* (2006.01)

(21) Application number: **00850033.2**

(22) Date of filing: **22.02.2000**

(54) **Channel estimation in a diversity receiver by using concurrently transmitted training sequences**

Kanalschätzung in einem Diversity-Empfänger durch gleichzeitige übertragene Trainingssequenzen

Evaluation de canal dans un récepteur en diversité utilisant des séquences d'apprentisssage simultanément transmises

(84) Designated Contracting States:
**AT BE CH CY DE DK ES FI FR GB GR IE IT LI LU MC NL PT SE**

(43) Date of publication of application:
**29.08.2001 Bulletin 2001/35**

(73) Proprietor: **TELEFONAKTIEBOLAGET LM ERICSSON (publ)**
**164 83 Stockholm (SE)**

(72) Inventors:
• **Popovic, Branislav**
**171 67 Solna (SE)**

• **HÖÖK, Mikael**
**191 34 Sollentuna (SE)**

(74) Representative: **Hägglund, Mats O. et al**
**Ericsson AB**
**Patent Unit Radio Networks**
**164 80 Stockholm (SE)**

(56) References cited:
**EP-A- 0 866 568**      **EP-A- 0 892 504**
**WO-A-97/08841**

**Description**

**TECHNICAL FIELD**

The invention is concerned with a transmission method in a radio communication system by means of transmit diversity signals.

**BACKGROUND ART**

In radio communication, the information is sent over a radio channel by frequency, amplitude or phase modulating of a radio wave with a processed information signal. The received radio signal containing the information can then be demodulated in a receiver to recreate the original information signal by means of the frequency, amplitude or phase variations in the received signal.

Both analog and digital communication systems exist. Today, digital techniques dominate the development of new communication systems, in spite of the higher complexity of these systems. Digital sending is used because digital signals can be perfectly reconstructed from a noisy and distorted version of the signal, provided that the distortion and noise are not too severe.

In a digital system, the information signal from an analog information source, which might be speech, first has to be converted into a digital bit stream by sampling and quantification. The digital bit stream consists of a sequence of data symbols in a given order, which is sent to the receiver over the radio channel.

As the physical radio channel is analog, the signals transmitted over the radio channel have to be modulated into analog radio waves that can carry the digital information in form of amplitude, phase or frequency variations in the radio wave. At the receiver, the received signal is processed in the reversed order compared to the transmitter, with the objective to reconstruct the original information signal by demodulation. The demodulator will, from the distorted received signal, convert the waveform to an estimate of the transmitted symbol.

The analog radio channel is not an ideal transmission medium since it is exposed for different disturbances, such as noise, interfering signals and multi-path transmission and this leads to a probability for errors in the estimating of the symbols of the information signal at the receiver.

The resulting bit error probability depends e.g. on the properties of the modulation method, the signal to noise ratio and the properties of the channel. The difference between the original signal and the reconstructed signal is a measure of the distortion introduced by the digital communication system.

A radio wave transmitted from a sender can arrive at the receiver via several different signal paths depending on the geographical environment and physical conditions. Buildings, mountains and other hinders are reasons to this multi-path transmission of the transmitted signal, with a distorted signal as a result. Also several other factors distort the transmitted signal and in cellular digital communication systems, the received signal is therefore a combination of the desired information signal, noise, co-channel interference and adjacent channel interference.

Multi-path transmission, that is caused by the radio channel itself over which the radio signal is sent, may introduce fading. The multi-path transmission therefore may result in Inter Symbol Interference (ISI) as the symbols constituting the signal arrive at different times. Thus, in multi-path transmission, the signal interferes with itself.

Diversity techniques are used to improve the performance of data transmission over fading channels. Diversity implies that the receiver is provided with multiple copies of the information transmitted over two or more independent channels. The basic idea of diversity techniques is that the repetition of the information together with an appropriate combining of the received signals will greatly reduce the negative effects of fading. Different diversity techniques are frequency diversity, time diversity, polarization diversity, angle diversity, selection diversity and space diversity.

Space diversity, also called antenna diversity, has been widely used in many applications and is maybe the most well known of the diversity techniques. In this technique, antennas are placed in different locations resulting in different signal levels. The transmitter and/or the receiver are foreseen with two or more antennas, which imply channels that are assumed to suffer from fading in different manners.

If more than one transmit antenna (N transmit antennas) is used to send the information signal to a receiver, the same information stream is transmitted concurrently from all N antennas over different channels.

Transmit diversity using multiple transmit antennas has recently attracted a remarkable attention in the communication literature and in the standardization bodies. Transmit diversity provides an improved performance over a multi-path fading channel through the provision of the number of spatially separated replicas of the transmitted signal. Those replicas pass through the different and loosely dependent communication channels, so there is an increased probability that the receiver will receive some signal replicas less attenuated by fading. The relative delays between the channels corresponding to the different transmit antennas are in most transmit diversity techniques assumed to be negligible, i.e. within a single transmitted symbol duration.

The simultaneous signals from the different transmit antennas should be separated at the receiver in some way. Multiple transmit antennas can for this purpose be provided in different ways.

One way is to switch the information signal between different antennas without overlap in time or frequency. This scheme does not perform well in situations when the channel is changing rapidly, as in mobile systems.

Another usual solution, presented for example in US Patent No. 5,479,448, is to transmit signals from different antennas separated in time with a method called space-time coding. The simultaneous signals from the different transmit antennas differ in time domain in order to separate them for decoding and achieve maximum spatial diversity gain by combining the signals. Regardless of which type of space-time codes is used, for the optimum decoding it is required that channel impulse responses corresponding to the signal paths between different transmit and receive antennas are known, i.e. estimated at the receiver.

Also in A. Wittneben, "Base Station Modulation Diversity for Digital SIMULCAST," 41st IEEE Vehicular Technology Society Conference Proceedings, pp. 848-853, the transmit bandwidth is improved over the diversity arrangement by splitting the information signal into e.g. two paths into two channels, the second of which has a delay element. The signal appearing at antenna B at any given instant of time is therefore the same signal as appeared at antenna A the preceding instant of time. The two signals are transmitted simultaneously, separated and reconstructed at the receiving station, and processed to isolate the desired information signal.

In the European patent application EP 0741 465, there is presented a transmission diversity system for selecting one of a plurality of radio transmission systems in a base station. The base station adds transmission of data and identification signals different in the plurality of radio transmission systems to transmit resultant radio signals from the plurality of radio transmission systems. The different transmit signals are separated by determining which one has the higher field strength.

In WO 97/41670, signals of different channel codes are transmitted in parallel simultaneously from different transmit antennas with or without delay. Inter Symbol Interference (ISI) is created which is resolved at the receiver using channel coding and maximum likelihood sequence detection or other techniques known in the art.

With equalization techniques, unknown time varying communication channel characteristics leading to Inter Symbol Interference (ISI) can be estimated by channel estimation by means of training sequences known at the receiver.

The training sequence with known symbols is transmitted before the real information signal or alternatively in the middle of the information signal, in which case it is called a mid-amble sequence. The received signal is a convolution between the transmitted training sequence and the channel impulse response. The channel estimation can then be performed by different signal processing methods such as The (LSSE) method described in S.N. Crozier, D.D. Falconer and S.A. Mahmoud, "Least sum of squared errors (LSSE) channel estimation", Proc. Inst. Elect. Eng., vol. 138, pp. 371-378, pt. F, Aug. 1991 or by performing a correlation between the received signals and a training sequence, as is described in J.C.L. Ng, K. Ben Letaief and R.D. Murch, "Complex Optimal Sequences with constant magnitude for Fast Channel Estimation initialization, "IEEE Trans. On Communications, vol. 46, no. 3, pp. 305 - 308, Mar. 1998 or B.M. Popovic', "Class of binary sequences for mobile channel estimation", Electronics Letters, Vol. 31, No. 12, pp. 9944-945, June 1995. (ERRATA-Printer's corrections: Vol. 31, No. 15, p. 1299, July 1995).

The training sequence can be constructed by one or both-side D-bits periodic extension of some so-called basic training sequence. In the receiver, the training sequence is correlated with the basic sequence resulting in a signal which is equal to the periodic auto-correlation of the basic sequence for delay values (= $0, \pm 1, \pm 2 .. \pm D$). The amount of extension bits, i.e. D, is chosen according to what is assumed to be enough to cover ISI caused by combination of modulation, pulse shaping, filters etc. plus time dispersion of the channel. An example of training sequences are those used in the GSM mobile communication system. In these training sequences, there are eight different 26 bit mid-amble sequences. Each 26 bit mid-amble sequence is formed from a 16 bit basic sequence plus 5 cyclically repeated bits at each end (D=5).

To obtain the exact channel impulse response, the training sequence should have zero periodic auto-correlation for non-zero delays in the range of maximum expected excess delay of the multi-path channel.

In mathematical terms, if the binary basic sequence is denoted by

$$a(k), k = 0,1,2..., N-1$$

the complex reference sequence (the correlation must be performed before demodulation, why a reference sequence is formed) obtained by linear transformation of the basic sequence corresponding to GMSK modulation of the basic training sequence, is

$$v(k) = j^k a(k) \qquad k = 0,1,2,...N-1 \qquad j = \sqrt{-1}$$

The received signal *x(n)* is a convolution between the transmitted mid-amble sequence $v_e(k)$ and the channel impulse response $h(l), l = 0,1,2,...L-1$

$$x(n) = \sum_{l=0}^{L-1} v_e(n-l)h(l)$$

If the mid-amble sequence is constructed by a both-side D-bit periodic extension of the basic sequence, the cross-correlation between the reference sequence and samples of the received signal is equal to

$$\Theta_{xv}(p) = \sum_{k=0}^{N-1} v^*(k)x(k+p) = \sum_{k=0}^{N-1} v^*(k)\sum_{l=0}^{L-1} v(k+p-l)h(l) = \sum_{l=0}^{L-1} h(l)\Theta_{vv}(p-l) \quad p = 0,1,2,...D$$

where * denotes complex conjugation, and $\Theta_{vv}$ is the periodic auto-correlation of the complex sequence *v(k)*. For MSK (Minimum Shift Queuing)-type modulated signals, the reference sequence is given by the equation for *v(k)* above, and we have

$$\Theta_{xv}(p) = \sum_{l=0}^{L-1} h(l) j^{p-l} \Theta_{aa}(p-l)$$

$$p = 0,1,2,...,D$$

where $\Theta_{aa}$ is the periodic auto-correlation of the binary basic sequence *a(k)*.
To obtain the exact channel impulse response (multiplied with a constant) estimation, to have

$$\Theta_{xv}(p) = Ch(p) \qquad p = 0,1,2,..,L-1$$

the periodic auto-correlation function $\Theta_{\alpha\alpha}(p)$ should be zero for

$$0 < |p| \le L - 1 \le D, i.e.$$

$$\Theta_{aa} = N, p = 0$$

$$0, \ 0 < |p| \le D$$

If D = N - 1, the sequence is called a perfect (ideal) auto-correlation sequence. Binary perfect auto-correlation sequences of lengths N>4 are not known. Binary "almost-perfect auto-correlation sequences", with all except one periodic auto-correlation side-lobes equal to zero, are presented in WOLFMANN, J: "Almost perfect auto-correlation sequences", IEEE Trans,1992,IT-38, (4), pp. 1412-1418. Like any other sequences that satisfy the above equation, these sequences are D-perfect auto-correlation sequences with D = N/2 - 1. GSM mid-amble basic sequences are also D-perfect auto-correlation sequences. Four GSM sequences have D = 6, whereas the other four are almost almost-perfect auto-correlation sequences with D=7.
If D = N/4, the sequence is called semi-perfect, having periodic auto-correlation function equal to zero for all non-zero delays in the range of $\pm$N/4 bit intervals. Such sequences are presented in B.M. Popovic', "Class of binary sequences for mobile channel estimation", Electronics Letters, Vol. 31, No. 12, pp. 9944-945, June 1995. (ERRATA-Printer's corrections: Vol. 31, No. 15, p. 1299, July 1995). For the construction of semi-perfect sequences of length 2N with required auto-correlation, pairs of semi-perfect sequences are used in the article. For each semi-perfect sequence *a(k),* another semi-perfect sequence *b(k)* can be constructed so that periodic cross-correlation between those two sequences is zero for all delays in the range of $\pm$ N/4 bit intervals, including also the zero delay. Mathematically, this can be described as

$$\theta_{ab}(p) = \theta_{ba}(p) = 0 \text{ for } /p/ < \text{ or } =\text{N/4}$$

where N is the number of bits in each sequence. Each such pair used to construct the sequences with required auto-correlation is called a semi-orthogonal pair.

If the transmit diversity using N transmit antennas is applied in a TDMA system, in each time slot N bursts, all containing the same information bits, are transmitted to a single user. In each of these N bursts, a different training sequence for the estimation of a corresponding channel has to be inserted.

In A.F.Naguib, V.Tarokh, N.Seshadri and A.R.Calderbank, "A Space-Time Coding Modem for High-Data-rate Wireless Communications, IEEE Journal on selected Areas in Communications, Vol. 16, No.8, pp.1459-1478, Oct.1998, there is presented such a system with multiple transmit and/or multiple receive antennas, wherein different training sequences are used to distinguish the parallel signals for channel estimation from each other. In this article, time dispersion of the channels corresponding to the antennas is not taken into consideration, i.e. it is assumed that the transmission is performed over flat-fading channels (having one transmission path). The training sequences used in the different antennas are othogonal, i.e. have zero cross-correlation for zero mutual delay. One of two training sequences (S1) used in said reference for transmit diversity with two antennas is the $\pi$/4-DPSQ synchronization sequence specified in the IS-136 standard. The second training sequence (S2) used in the reference is not explicitly specified.

This solution, however, does not work well in all geographical environments and physical conditions. When buildings, mountains and other hinders cause multi-path transmission of the transmitted signal, the signal is distorted, and this distortion should be taken into consideration in the estimation of the signal.

The object of the invention is to develop a method for channel estimation for transmit diversity systems fulfilling the requirements of accuracy by taking the distortion caused by multi-path transmission into consideration.

## SUMMARY OF THE INVENTION

The object of the invention is achieved with a transmission method in a radio communication system by means of transmit diversity signals sent concurrently from two or more transmit antennas of a transmitter to one or more receive antennas of a receiver over radio channels. The channel between each transmit antenna and each receive antenna is estimated in the receiver by using concurrently transmitted training sequences. The method is mainly characterized in that each training sequence, consisting of a basic sequence and a periodic extension of the basic sequence on one or on both sides of the basic sequence, is transmitted from a different antenna. Each basic sequence has a periodic cross-correlation with any other concurrently transmitted basic sequence equal to zero in a certain delay range, including the zero mutual delay, and furthermore each basic sequence has a periodic auto-correlation equal to zero for all non-zero delays within said delay range. Said delay range being selected by taking the expected time dispersion of the multi-path channel impulse responses into consideration.

Preferably, the delay range correspond to the maximum expected time dispersion of the multi-path channel impulse responses including ISI from modulation, filters etc... In practice, the delay range requirement is fulfilled so that the basic sequence is extended on one or both sides with the corresponding amount of symbols and thus corresponds to said periodic extension of the basic sequence on one or on both sides of the basic sequence

In the invention it has been taken into consideration that in a multi-path (fading) channel, the basic training sequences used for transmit diversity have to satisfy a more demanding requirement than just being orthogonal. For example, the eight basic training sequences used in the GSM system have excellent auto-correlation properties, but have very bad cross-correlation properties, making them unsuitable for the application in transmit diversity schemes.

It was found in the invention that for obtaining an accurate channel impulse response in transmit diversity systems, the training sequences used have to be such that periodic cross-correlation between any two basic training sequences is as low as possible for a range of mutual delays corresponding to a given excess delay, preferably the maximum expected excess delay, i.e the difference between delays of the first and the last path in the multi-path channel impulse response, of the multi-path channel. Ideally, that correlation should be equal to zero. Furthermore each basic sequence shall have a periodic auto-correlation equal to zero for all non-zero delays within said delay range

In case of a TDMA system, N bursts are transmitted to a single user in each TDMA time slot. All these bursts must have different training sequences, such that periodic cross-correlation between any two of them, as well as out-of-phase periodic auto-correlation of each training sequence is as low as possible (ideally zero) for a range of mutual delays corresponding to the maximum expected excess delay of the multi-path channel. The invention can also be applied for other systems, such as e.g. CDMA and FDMA systems, in which case all concurrently set signals shall have different training sequences with the properties found to be necessary in the invention.

For transmit diversity with two antennas, optimal examples of training sequences fulfilling the requirements are pairs of so called semi-perfect binary sequences, such as e.g. those described in B.M. Popovic', "Class of binary sequences for mobile channel estimation", Electronics Letters, Vol. 31, No. 12, pp. 9944-945, June 1995. (ERRATA-Printer's corrections: Vol. 31, No. 15, p. 1299, July 1995). The existence of semi-orthogonal pairs of semi-perfect sequences as such did not have any particular significance for the conventional transmission systems with one transmit antenna and these sequences were used in the article for constructing sequences with good auto-correlation only. However, for the invention it was found that such pairs of sequences can be made use of in new transmit diversity systems with two transmit antennas and concurrent transmissions from both transmit antennas where the properties of the pairs of semi-perfect binary sequences are of crucial importance.

For transmit diversity with two or more, especially more, antennas, optimal examples of training sequences fulfilling the requirements are the sets of so-called Zero Correlation Zone (ZCZ) binary sequences, such as those described in P.Z.Fan, N.Suehiro, N.Kuroyanagi and X.M. Deng, "Class of binary sequences with zero correlation zone", Electronic Letters, Vol. 35, No. 10, pp. 777-779, May 1999. The sets of so-called Zero Correlation Zone (ZCZ) binary sequences were developed for the third generation wide-band CDMA systems in which they were not used as training sequences but as spreading codes used to discriminate the different signals from each other. In a typical CDMA system, the spreading codes are designed to have very low auto-correlation sidelobes (preferably zero sidelobes) and very low cross-correlations (preferably zero cross-correlations). However, it has been proven that it is impossible to design a set of spreading codes with ideal impulsive auto-correlation functions and ideal zero cross-correlation functions, thus resulting in co-channel interference in practical CDMA systems. The article presents a solution to this for improving wide-band CDMA systems to be more tolerant to the multi-path problem and decrease co-channel interference with algorithms to construct such ZCZ sequences to be used in the CDMA systems. In the invention it was found that these methods can be used to construct sequences with required properties for the training sequences to be used in the transmit diversity system of the invention.

In the following, the invention is described by means of figures and examples which are not intended to restrict the invention. For example, the amount of transmit antennas can vary in the scope of the invention and so can the amount of receive antennas, even if the figures only present one receive antenna. Also the special training sequences, presented in form of examples in the following text, can vary within the scope of the claims.

## FIGURES

Figure 1 illustrates a first embodiment of the invention schematically.
Figure 2 illustrates a second embodiment of the invention schematically .

## DETAILED DESCRIPTION

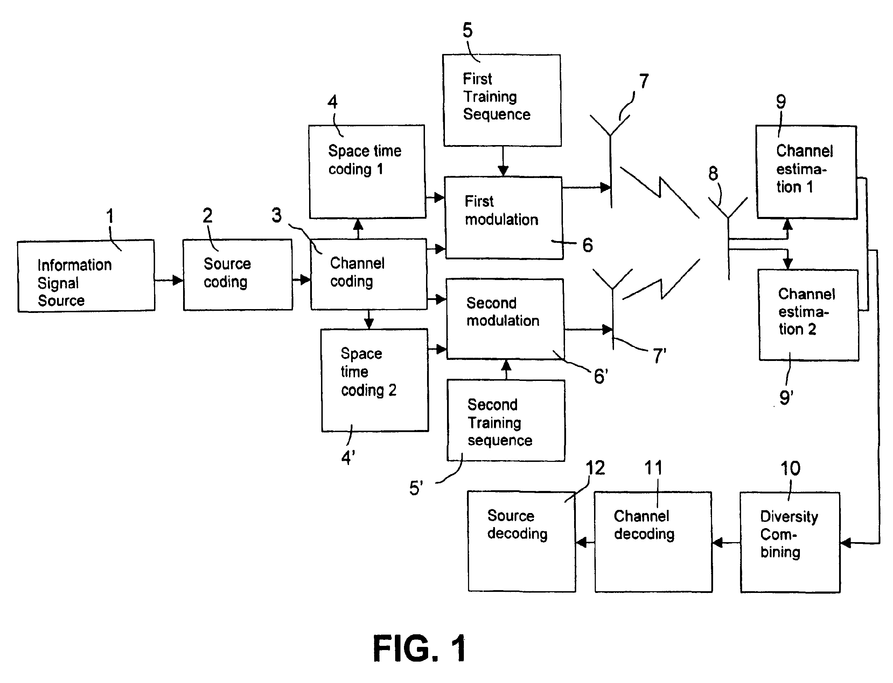

Figure 1 illustrates schematically the environment, wherein a first embodiment of the invention can be applied. The idea in the first embodiment is to achieve diversity gain by combining multi-path signals from two transmitting antennas.

If the information signal is from an analog signal source 1, such as speech or video, it is sampled and quantified in an A/D converter to form a digital description of the analog source signal. Data signals are digital signal sources. The digital signal is coded 2 in a source coder, such as a speech coder, to form a sequence of symbols describing the information signal. Channel coding 3 is performed by some conventional channel coding method by adding data bits in such a way that correction of symbols that are not correctly received by the receiver can be corrected.

Space-time coding is performed 4, 4' so that the simultaneous signals from the different transmit antennas should differ in time domain in order to make decoding of the signals possible, e.g. by maximum likelihood decoding, and to achieve spatial diversity gain. For an optimum decoding it is required that channel impulse responses corresponding to the signal paths from different transmit antennas are known, or can be estimated at the receiver.

Thereafter a first training sequence is added 5 to the information signal after the space-time coding 4 so that the receiver can perform a first channel estimation 9 and learn how to estimate the desired information signal from the received signal containing the desired signal and unwanted parts. Modulation of a carrier wave with the first training sequence 5 and the information signal is then performed 6 and sent to the receiver through a first antenna 7.

A second training sequence is also added 5' to the information signal after the space-time coding 4' so that the reciever can perform a second channel estimation. Modulation of a carrier wave with the second training sequence and the information signal is performed 6' and sent to the receiver through a second antenna 7'.

The transmitted signals are received by the receiver antenna 8. The receiver performs a first channel estimation 9 by using the first training sequence 5 and a second channel estimation 9' by using the second training sequence 5'.

The channel estimations are performed by means of the training sequences which are known at the receiver. The received signal is a convolution between the transmitted training sequences and the channel impulse responses. The information signal is estimated by means of known algorithms for said convolution as was presented earlier in the part describing background art.

The training sequences are constructed by one or both-side D-bits periodic extension of some so-called basic training sequences. In other words, the training sequences are obtained by concatenation of the last D bits of the basic sequences in front of the basic sequences and/or by concatenation of the first D bits of the basic sequences after the basic sequences. The first D extension bits preceding the basic sequences are the same as the last bits of the basic sequences. The second D extension bits after the basic sequence are the same as the first D bits of the basic sequence. In the receiver, in each channels estimation, the training sequence is correlated with the basic sequence resulting in a signal which is equal to the periodic auto-correlation of the basic sequence for delay values (=0, 1, 2..$\pm$ D). The amount of extension bits, i.e. D, is chosen according to what is assumed to be enough to cover ISI caused by combination of modulation, pulse shaping, filters etc. plus time dispersion of the channel.

The estimated information signals are then combined 10 to obtain diversity gain of the multi-path channel signals received. The receiver then performs channel decoding 11 and source decoding 12 of the combined information signal.

According to the invention, the training sequences, have certain properties so that the signals could be distinguished from each other.

The first requirement is that the periodic crosscorrelation between the basic sequencies of the training sequencies used shall be equal to zero in a suitable range, including the zero mutual delay at a value within the range.

The second requirement is that the periodic auto-correlation of any of the basic sequences is equal to zero for all non-zero delays within said delay range.

A semi-perfect auto-correlation sequence is a sequence a(k) having the periodic auto-correlation function $\Theta_{aa}$ (p) = 0 at $\pm$ N/4 bit intervals around the origin, i.e. D = N/4 in the equation

$$\Theta_{aa} = N, p = 0$$

$$0, \ 0 < |p| \le D$$

The name of these sequences comes from the fact that half of all periodic auto-correlation side-lobes are equal to zero. According to a preferable embodiment of the invention, pairs of so called semi-perfect binary sequences, can be used in transmit diversity systems with two transmitting antennas.

Semi-perfect sequences exist for lenghts Lsp = 4,8,16,32,... etc, or in general Lsp = $2^{n+1}$, where n = 1,2,3, ....etc. Each so called semi-orthogonal pair of semi-perfect sequences has the periodic cross-correlation equal to zero in the range of +/- D symbols around, and including, the zero mutual delay, where D = Lsp/4 = $2^{n+1}$. At the same time, each such semi-perfect sequence has periodic auto-correlation equal to zero for all non-zero delays in the range of +/- D symbols.

The only existing semi-orthogonal pair of semi-perfect sequences of length 4 is

    1. $S_4$ (0,k) = [0 1 1 1]
    $S_4$ (1,k) = [0 0 1 0]

These are semi-perfect sequences because the auto-correlation property of them both, i.e. the similarity between the basic sequence and its time shifted version is zero, and they form a semi-orthogonal pair because their cyclical cross-correlation at the range of plus or minus 4 bits is zero.

The article "Class of binary sequences for mobile channel estimation", by B.M. Popovic', ELECTRONICS LETTERS, 8thJune, Vol.31, No. 12, presents the algorithm for constructing more such sequences of different lengths. By using the recursive construction methods described in the article, all the cyclically different semi-orthogonal pairs of e.g. length 16 are obtained

    1. $S_{16}$ (0,k) = [0 0 0 1 1 1 0 1 1 1 1 0 1 1 0 1]
    $S_{16}$ (1,k) = [0 1 0 0 1 0 0 0 1 0 1 1 1 0 0 0]

    2. $S_{16}$ (2,k) = [0 0 1 0 1 1 1 0 1 1 0 1 1 1 1 0]

$S_{16}(3,k) = [0\ 1\ 1\ 1\ 1\ 0\ 1\ 1\ 1\ 0\ 0\ 0\ 1\ 0\ 1\ 1]$

$3.S_{16}(4,k) = [0\ 0\ 0\ 1\ 1\ 0\ 1\ 1\ 1\ 1\ 1\ 0\ 1\ 0\ 1\ 1]$
$S_{16}(5,k) = [0\ 0\ 1\ 0\ 1\ 0\ 0\ 0\ 1\ 1\ 0\ 1\ 1\ 0\ 0\ 0]$

$4.S_{16}(6,k) = [0\ 1\ 0\ 0\ 1\ 1\ 1\ 0\ 1\ 0\ 1\ 1\ 1\ 1\ 1\ 0]$
$S_{16}(7,k) = [0\ 1\ 1\ 1\ 1\ 1\ 0\ 1\ 1\ 0\ 0\ 0\ 1\ 1\ 0\ 1]$

$5.S_{16}(8,k) = [0\ 0\ 0\ 1\ 0\ 0\ 1\ 0\ 1\ 1\ 1\ 0\ 0\ 0\ 1\ 0]$
$S_{16}(9,k) = [0\ 1\ 0\ 0\ 0\ 1\ 1\ 1\ 1\ 0\ 1\ 1\ 0\ 1\ 1\ 1]$

$6.\ S_{16}(10,k) = [0\ 0\ 1\ 0\ 0\ 0\ 0\ 1\ 1\ 1\ 0\ 1\ 0\ 0\ 0\ 1]$
$S_{16}(11,k) = [0\ 1\ 1\ 1\ 0\ 1\ 0\ 0\ 1\ 0\ 0\ 0\ 0\ 1\ 0\ 0]$

$7.S_{16}(12,k) = [0\ 0\ 0\ 1\ 0\ 1\ 0\ 0\ 1\ 1\ 1\ 0\ 0\ 1\ 0\ 0]$
$S_{16}(13,k) = [0\ 0\ 1\ 0\ 0\ 1\ 1\ 1\ 1\ 1\ 0\ 1\ 0\ 1\ 1\ 1]$

$8.S_{16}(14,k) = [0\ 1\ 0\ 0\ 0\ 0\ 0\ 1\ 1\ 0\ 1\ 1\ 0\ 0\ 0\ 1]$
$S_{16}(15,k) = [0\ 1\ 1\ 1\ 0\ 0\ 1\ 0\ 1\ 0\ 0\ 0\ 0\ 0\ 1\ 0]$

The expected excess delay might be in the order of 4 symbols.

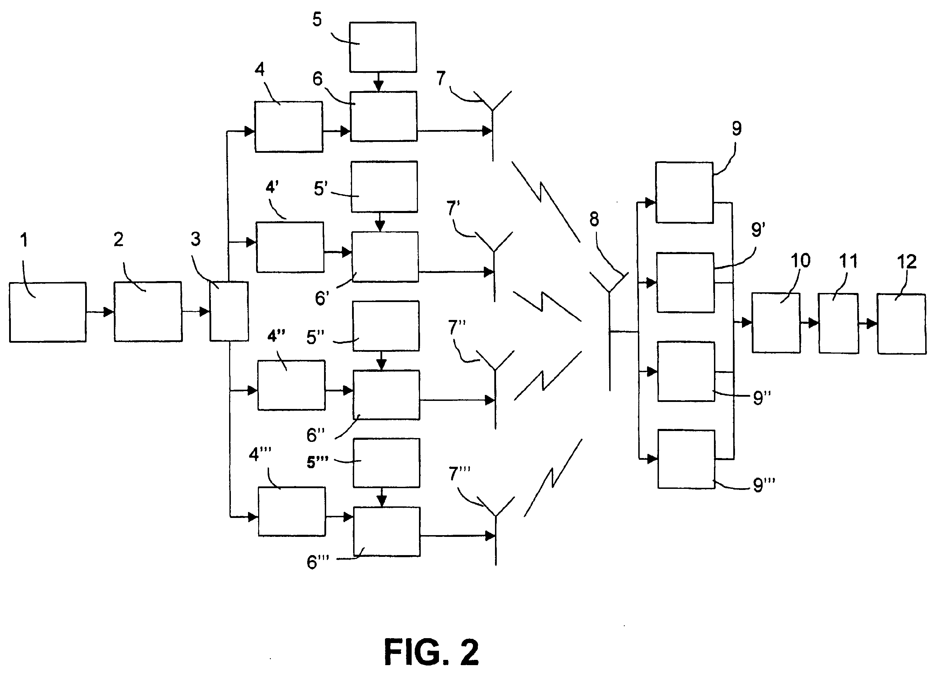

Figure 2 illustrates schematically the environment, wherein a second embodiment of the invention can be applied. The idea in this embodiment is to achieve diversity gain by combining multi-path signals from four transmitting antennas.

In figure 2, the same functions 1,2, 3 and 4 are performed as in figure 1 except that space-time coding is now performed 4, 4', 4", 4"' for four antennas.

Thereafter four different training sequences are added 5, 5', 5" and 5"' to the information signal after the space-time coding so that the receiver can perform four channel estimations and learn how to estimate the desired information signal from the received signal containing the desired signal and unwanted parts. Modulation of a carrier wave with the training sequences 5, 5', 5" and 5"' and the information signal is then performed 6, 6', 6" and 6"' and sent to the receiver through four different antennas 7, 7', 7" and 7"'.

The transmitted signals are received by the receiver antenna 8. The receiver performs four channel estimations 9, 9', 9" and 9"' by using the four different training sequences 5, 5', 5" and 5"'. The channel estimations are performed as above.

The estimated information signals are then combined 10 to obtain diversity gain of the multi-path channel signals received. The receiver then performs channel decoding 11 and source decoding 12 of the combined information signal as above.

Also in this embodiment, the training sequences have the above auto-correlation and cross-correlation properties so that the signals could be distinguished from each other. According to a preferable embodiment of the invention, sets of so-called Zero Correlation Zone (ZCZ) binary sequences, can be used in transmit diversity systems with two or more, preferably more, transmitting antennas, such as four transmitting antennas a s in this embodiment.

The sets of ZCZ sequences contain M sequences of length Lzcz so that $LzcZ > M > 1$, have zero correlation zone ZcZ equal to $Zcz = 2D + 1 = Lzcz/M+1$. This means that any two sequences from the set of ZCZ sequences have the periodic cross-correlation equal to zero in the range of +/- D symbols around, and including, the zero mutual delay, where $D = Lzcz/2M$. In the same time, each such ZCZ sequence has periodic auto-correlation equal to zero for all non-zero delays in the range of +/- D symbols.

Such ZCZ sequences exist for sequence lengths Lzcz = 8, 32, 128, 512, etc, or in general $Lzcz = 2^{2n+1}$, where n =1,2,...etc. The number of sequences in the set is M = 4,8,16,32,... etc, or in general, $M = 2^{n+1}$. The ZCZ sequence sets with other sequence lengths can be obtained by truncating the above ZCZ sets, but in that case, the zero correlation zone is also truncated.

Different methods for constructing sets of binary ZCZ sequences are described in P.Z.Fan, N.Suehiro, N.Kuroyanagi and X.M. Deng, "Class of binary sequences with zero correlation zone", Electronic Letters, Vol. 35, No. 10, pp. 777-779, May 1999.

For example the following set of ZCZ sequences can be constructed with the above methods.

S1: [- - + + + - - +]
S2: [- - - - + - + -]
S3: [+ - - + - - + +]

S4: [+ - + - - - - -]

This set has the required property that the periodic cross-correlation between any two sequences from the set is zero in the delay range of ± 1 bit intervals, including zero delay. Also the periodic auto-correlation of each such sequence is zero for non-zero delays in the same delay range.

Another example is

S1: [+ + - + + + - + - - - + - - - +]
S2: [- - + - + + - + + + + - - - - +]
S3: [+ - - - + - - - - + - - - + - -]
S4: [- + + + + - - - + - + + - + - -]

This set has the required property that the periodic cross-correlation between any two sequences from the set is zero in the delay range of ± 2 bit intervals, including zero delay. Also the periodic auto-correlation of each such sequence is zero for non-zero delays in the same delay range.

The sets of ZCZ sequences can also be used for transmit diversity with N = 2 antennas, but in that case that are less efficient than the pairs of semi-perfect sequences, in terms of the relative size of their zero correlation zone compared with the length of sequences. For example, if the length of the basic training sequences is equal to L = 16 (the same as in GSM or EDGE), there are 8 pairs of semi-perfect sequences, as was presented above. Each pair has the periodic cross-correlation equal to zero in the range of +/- D symbols around, and including, the zero mutual delay, where D = 4. At the same time, each such semi-perfect sequence has periodic auto-correlation equal to zero for all non-zero delays in the range of +/- D symbols, where D = 4. To have the same size D = 4 of zero correlation zone, the ZCZ sequences of length L=32 have to be used.

Compared with the number of GSM mid-ambles, the number of transmit diversity pairs based on semi-perfect sequences of length 16 symbols is the same. The range of delays producing zero auto-correlation is a bit smaller. In GSM four mid-ambles have D = 6, whereas the other four have D = 7. On the other hand, the GSM mid-ambles have very bad cross-correlation functions. All in all, the above example of training pairs of length 16 symbols for transmit diversity with two antennas matches very well the structure of GSM interface, as well as the structure of EDGE burst format. This allows the application of already existing GSM and EDGE channel equalisation techniques in the corresponding systems with transmit diversity.

If larger D is required, in order to estimate longer channel responses, the length of training sequences can be chosen to be L = 32, in which case D = 8.

## Claims

1. Transmission method in a radio communication system by means of transmit diversity signals sent concurrently from two or more transmit antennas (7, 7') of a transmitter to one or more receive antennas (8) of a receiver over radio channels, where the channel between each transmit antenna and each receive antenna is estimated (9, 9') in the receiver by using concurrently transmitted training sequences, **characterized in that**

   a) each training sequence, consisting of a basic sequence and a periodic extension of the basic sequence on one or on both sides of the basic sequence, is transmitted from a different antenna,
   b) each basic sequence has a periodic cross-correlation with any other concurrently transmitted basic sequence equal to zero in a certain delay range, including the zero mutual delay, and
   c) each basic sequence has a periodic auto-correlation equal to zero for all non-zero delays within said delay range,

   said delay range being selected by taking the expected time dispersion of the multipath channel impulse responses into consideration.

2. Method of claim 1, **characterized in that** said delay range is selected to correspond to the maximum expected time dispersion of the multi-path channel impulse responses.

3. Method of claim 1 or 2 , **characterized in that** the delay range corresponds to said periodic extension of the basic sequence on one or on both sides of the basic sequence

4. Method of any of claims 1 - 3, **characterized in that** when two antennas are used to transmit the signals, the training sequences used are a pair of semi-perfect and semi-orthogonal binary sequences.

5. Method of any of claims 1 - 3, **characterized in that** when two or more, preferably when more, antennas are used to transmit the signals, the training sequences used are a set of Zero Correlation Zone (ZCZ) binary sequences.

6. Use of the method of any of claims 1 - 5 in TDMA communication systems with transmit diversity, whereby the length of the basic training sequences are 16 symbols.

**Patentansprüche**

1. Sendeverfahren in einem Funkkommunikationssystem mittels Sende-Diversity-Signalen, die gleichzeitig von zwei oder mehr Sendeantennen (7, 7') eines Senders an eine oder mehr Empfangsantennen (8) eines Empfängers über Funkkanäle gesendet werden, wobei der Kanal zwischen jeder Sendeantenne und jeder Empfangsantenne im Empfänger durch Verwendung gleichzeitig gesendeter Trainingssequenzen geschätzt wird (9, 9'), **dadurch gekennzeichnet, daß**

a) jede Trainingssequenz, die aus einer Grundsequenz und einer periodischen Erweiterung der Grundsequenz auf einer oder auf beiden Seiten der Grundsequenz besteht, von einer anderen Antenne gesendet wird,
b) jede Grundsequenz mit jeder anderen gleichzeitig gesendeten Grundsequenz in einem bestimmten Verzögerungsbereich, einschließlich der gegenseitigen Null-Verzögerung, eine periodische Kreuzkorrelation hat, die gleich null ist, und
c) jede Grundsequenz für alle Nicht-null-Verzögerungen in dem Verzögerungsbereich eine periodische Autokorrelation hat, die gleich null ist,

wobei der Verzögerungsbereich unter Berücksichtigung der erwarteten zeitlichen Streuung der Mehrwegkanal-Impulsantworten ausgewählt wird.

2. Verfahren nach Anspruch 1, **dadurch gekennzeichnet, daß** der Verzögerungsbereich so ausgewählt wird, daß er der maximalen erwarteten zeitlichen Streuung der Mehrwegkanal-Impulsantworten entspricht.

3. Verfahren nach Anspruch 1 oder 2, **dadurch gekennzeichnet, daß** der Verzögerungsbereich der periodischen Erweiterung der Grundsequenz auf einer oder auf beiden Seiten der Grundsequenz entspricht.

4. Verfahren nach einem der Ansprüche 1 bis 3, **dadurch gekennzeichnet, daß**, wenn zwei Antennen verwendet werden, die verwendeten Trainingssequenzen ein Paar semiperfekte und semiorthogonale binäre Sequenzen sind.

5. Verfahren nach einem der Ansprüche 1 bis 3, **dadurch gekennzeichnet, daß**, wenn zwei oder mehr, vorzugsweise wenn mehr Antennen verwendet werden, um die Signale zu senden, die verwendeten Trainingssequenzen eine Menge binärer Nullkorrelationszonen-(ZCZ-)Sequenzen sind.

6. Verwendung des Verfahrens nach einem der Ansprüche 1 bis 5 in TDMA-Kommunikationssystemen mit Sende-Diversity, wobei die Länge der Grund-Trainingssequenzen 16 Symbole beträgt.

**Revendications**

1. Procédé de transmission dans un système de communication radio au moyen de signaux en diversité d'émission qui sont envoyés de façon concurrente depuis deux antennes d'émission ou plus (7, 7') d'un émetteur jusqu'à une antenne de réception (8) ou plus d'un récepteur sur des canaux radio, dans lequel le canal entre chaque antenne d'émission et chaque antenne de réception est estimé (9, 9') dans le récepteur en utilisant des séquences d'apprentissage transmises de façon concurrente, **caractérisé en ce que**:

a) chaque séquence d'apprentissage, qui est constituée par une séquence de base et par une extension périodique de la séquence de base sur un côté ou sur les deux côtés de la séquence de base, est transmise depuis une antenne différente,
b) chaque séquence de base présente une corrélation croisée périodique avec n'importe quelle autre séquence de base transmise de façon concurrente qui est égale à zéro dans une certaine plage de retards, incluant le retard mutuel de zéro, et

c) chaque séquence de base présente une auto-corrélation périodique qui est égale à zéro pour tous les retards non à zéro à l'intérieur de ladite plage de retards,

ladite plage de retards étant sélectionnée en prenant en considération la dispersion temporelle attendue des réponses impulsionnelles de canal multivoies.

**2.** Procédé selon la revendication 1, **caractérisé en ce que** ladite plage de retards est sélectionnée de manière à correspondre à la dispersion temporelle attendue maximum des réponses impulsionnelles de canal multivoies.

**3.** Procédé selon la revendication 1 ou 2, **caractérisé en ce que** la plage de retards correspond à ladite extension périodique de la séquence de base sur un côté ou sur les deux côtés de la séquence de base.

**4.** Procédé selon l'une quelconque des revendications 1 à 3, **caractérisé en ce que**, lorsque deux antennes sont utilisées pour émettre les signaux, les séquences d'apprentissage qui sont utilisées sont une paire de séquences binaires semi-parfaites et semi-orthogonales.

**5.** Procédé selon l'une quelconque des revendications 1 à 3, **caractérisé en ce que**, lorsque deux antennes ou plus, de préférence lorsque plus d'antennes sont utilisées pour émettre les signaux, les séquences d'apprentissage qui sont utilisées sont un jeu de séquences binaires de Zone de Corrélation Zéro (ZCZ).

**6.** Utilisation du procédé selon l'une quelconque des revendications 1 à 5 dans des systèmes de communication TDMA avec diversité en émission et ainsi, la longueur des séquences d'apprentissage de base est de 16 symboles.

**FIG. 1**

EP 1 128 575 B1

**FIG. 2**

EP 1 128 575 B1